# EUROPÄISCHE PATENTANMELDUNG

(11) **EP 3 428 853 A1**
(43) Veröffentlichungstag der Anmeldung: **16.01.2019**
(21) Anmeldenummer: 17181511.1
(22) Anmeldetag: 14.07.2017
(51) Int. Cl.: G06K 19/10, G06K 9/00, G07D 7/00, B42D 25/305, H04L 9/32

(54) **VERFAHREN ZUM SCHÜTZEN EINES PRODUKTES GEGEN FÄLSCHUNGEN**

(71) Anmelder: A&R Carton GmbH, 65830 Kriftel (DE)
(72) Erfinder: MACK, Ralf, 81827 München (DE); MISOF, Peter, 86517 Wehringen (DE)
(74) Vertreter: Hauck Patentanwaltspartnerschaft mbB

(57) **Zusammenfassung**

Verfahren zum Schützen eines Produkts gegen Fälschungen umfassend die folgenden Schritte:
1.1
auf ein Verpackungsmaterial wird ein Sicherheitslack aufgedruckt, der als individualisierendes Sicherheitsmerkmal chaotisch angeordnete Mikrostrukturen aufweist, die von außen optisch erfassbar sind,
1.2
auf das Verpackungsmaterial wird ein optisch erfassbarer Produktcode aufgedruckt,
1.3
auf das Verpackungsmaterial wird als weiteres Sicherheitsmerkmal mindestens eine Sonderfarbe außerhalb des CMYK-Farbraumes aufgedruckt,
1.4
die Mikrostrukturen und der Produktcode auf dem Verpackungsmaterial werden erfasst und mit der Sonderfarbe als Information über ein bestimmtes originales Verpackungsmaterial in einer Datenbank abgelegt,
1.5
die Mikrostrukturen, der Produktcode und die Sonderfarbe auf dem Verpackungsmaterial werden mittels einer optoelektronischen Erfassungseinrichtung erfasst,
1.6
die vorstehenden Informationen werden zur Authentifizierung des Produktes an einen Rechner übermittelt und der Rechner überprüft unter Rückgriff auf die Datenbank, ob die mittels der optoelektronischen Erfassungseinrichtung erfassten Informationen mit den in der Datenbank abgelegten Informationen für ein bestimmtes originales Verpackungsmaterial übereinstimmen.

## Beschreibung

Die Erfindung betrifft ein Verfahren zum Schützen eines Produktes gegen Fälschungen.

Produktfälschungen verursachen erhebliche wirtschaftliche Schäden. Aufgrund von Mängeln gefälschter Produkte kann es zudem zu Funktionseinbußen und technischem Versagen kommen. Gefälschte Babynahrung, Pharmazeutika und Nahrungs- und Genussmittel können zu schweren gesundheitlichen Schäden und sogar Todesfällen führen. Deshalb wird nach Lösungen gesucht, Produktfälschungen einfach und sicher zu erkennen.

Bekannt ist, Produkte zum Schutz gegen Fälschungen mit individualisierenden Sicherheitsmerkmalen zu versehen. Beispielsweise werden Produkte mit individuellen Produktnummern gekennzeichnet, die von Händlern, Verbrauchern, Markenherstellern und Ermittlern durch Online-Abfrage einer Datenbank für eine Echtheitsprüfung herangezogen werden können. Festgestellt wurde, dass Fälscher die Produktcodes in Handelsfilialen abfotografieren und mittels Digitaldruck auf falsche Verpackungen aufbringen, die dann als Originalprodukt verkauft werden.

Weiterentwickelte Fälschungssicherungen sollen derartige Fälschungen unterbinden. Hierzu ist bekannt, das Originalprodukt mit einem durch eine individuelle Anordnung aus bunten Fasern mikrostrukturierten Papieretikett und einem darauf aufgedruckten Produktcode zu versehen. Zur Verifizierung der Authentizität des Produktes werden Mikrostruktur und Produktcode mittels Smartphone mit Kamera und mobiler App erfasst und mit einer Datenbank abgeglichen, in der Produktcode und Mikrostruktur des Originalprodukts hinterlegt sind.

Das Herstellen und Anbringen der Fälschungssicherungen am Produkt oder seiner Verpackung ist aufwendig. Ferner wird das optische Erscheinungsbild beeinträchtigt.

Die US 2015/0014983 A1 beschreibt eine Markierung für den Fälschungsschutz, die einen druckbaren Code umfasst, der zumindest teilweise von einer transparenten Zwischenschicht enthaltend zumindest einen Typ von zufällig verteilten Flocken bedeckt ist, wobei die transparente Zwischenschicht zumindest teilweise von einer Schicht aus einem chiralen Flüssigkristallpolymer (CLCP) bedeckt ist. Der Code wird mittels einer Kamera eines Mobilphones gelesen und mit abgespeicherten Informationen verglichen. Die CLCP-Schicht soll durch einen Glanzeffekt einen Kopierschutz bewirken.

Die DE 10 2011 012 274 A1 beschreibt ein Verfahren zum drucktechnischen Erzeugen einer strukturierten Fläche, wobei eine Flüssigkeit und Partikel auf ein Substrat aufgebracht werden und durch Blasen eines Gases auf die ungehärtete Flüssigkeit eine stochastische Oberflächen-Strukturierung der Flüssigkeit und eine stochastische Partikel-Verteilung erzeugt wird. Das Sicherheitsmerkmal soll nur sehr schwer von einem potentiellen Fälscher nachzuahmen sein, da es eine äußere, offene 3D-Struktur der Oberfläche ("Berg-Tal-Effekt") und eine innere, verdeckte Struktur der Partikelverteilung (variabler "Glitzer-Effekt") aufweist. Ein einfaches Kopieren des Merkmals auf heute üblichen Kopierern soll somit ausgeschlossen sein. Das Verfahren erfordert eine spezielle Druckmaschine, die mit einer Vorrichtung zum Anblasen ausgerüstet ist.

Die US 2011/0183710 A1 beschreibt ein eindeutiges Etikett zum Verhindern von Fälschungen und Identifizieren eines Produktes, bei dem auf einem transparenten Blatt eine Vielzahl ausgestanzter Partikel verschiedener Größen im Bereich von 10 bis 4000 µm in zufälliger Ausrichtung angeordnet sind. Die Teilchen werden während der Produktion oder Verpackung mittels einer optischen Bilderfassungseinrichtung erfasst und die Daten der Teilchen werden in einer zentralen Datenbank hinterlegt. Die Datenbank ist zugänglich, um die Originalität des Produktes zu verifizieren, an dem das eindeutige Etikett angebracht ist. Die Herstellung des Etiketts ist aufwendig.

Die weiterentwickelten Fälschungssicherungen mit stochastischen Strukturen können fotografiert und auf gefälschte Verpackungen aufgedruckt werden. Eine Digitalkamera kann die stochastischen Strukturen auch auf dem aufgedruckten Foto erfassen, so dass die Kopie beim Abgleich der Daten nicht auffällt.

Davon ausgehend liegt der Erfindung die Aufgabe zugrunde, ein sichereres Verfahren zum Schützen eines Produktes gegen Fälschungen zur Verfügung zu stellen.

Die Aufgabe wird erfindungsgemäß durch ein Verfahren mit den Merkmalen von Anspruch 1 gelöst. Vorteilhafte Ausgestaltungen des Verfahrens sind den Unteransprüchen angegeben.

Das erfindungsgemäße Verfahren zum Schützen eines Produktes gegen Fälschungen umfasst die folgenden Schritte:
- 1.1.: auf ein Verpackungsmaterial wird ein Sicherheitslack aufgedruckt, der als individualisierendes Sicherheitsmerkmal chaotisch angeordnete Mikrostruktu-ren aufweist, die von außen optisch erfassbar sind,
- 1.2.: auf das Verpackungsmaterial wird ein optisch erfassbarer Produktcode aufge-druckt,
- 1.3.: auf das Verpackungsmaterial wird als weiteres Sicherheitsmerkmal mindestens eine Sonderfarbe außerhalb des CMYK-Farbraums aufgedruckt,
- 1.4.: die chaotisch angeordneten Mikrostrukturen und der Produktcode auf dem Verpackungsmaterial werden erfasst und mit der Sonderfarbe als Information über ein bestimmtes originales Verpackungsmaterial in einer Datenbank abgelegt,
- 1.5.: die chaotisch angeordneten Mikrostrukturen, der Produktcode und die Sonder-farbe auf dem Verpackungsmaterial werden mittels einer optoelektronischen Erfassungseinrichtung erfasst,
- 1.6.: die vorstehenden (gemäß 1.5 erfassten) Informationen werden zur Authentifizierung des Produktes an einen Rechner übermittelt und der Rechner überprüft unter Rückgriff auf die Datenbank, ob die mittels der optoelektronischen Erfassungseinrichtung erfassten Informationen mit den in der Datenbank abgelegten Informationen für ein bestimmtes originales Verpackungsmaterial übereinstimmen.

Erfindungsgemäß wird auf ein Verpackungsmaterial ein Sicherheitslack aufgedruckt, der als individualisierendes Sicherheitsmerkmal chaotisch angeordnete Mikrostrukturen aufweist. Hierbei handelt es sich um Strukturen, die optisch erfassbar sind. Ferner wird auf das Verpackungsmaterial ein optisch erfassbarer Produktcode aufgedruckt. Der Produktcode enthält beispielsweise eine oder mehrere der nachfolgenden Informationen: Chargennummer, Produktnummer, Produktionszeitpunkt, Abfüllanlagennummer, Haltbarkeitsdaten und andere Produkt- und produktionsspezifische Daten. Als weiteres Sicherungsmerkmal wird auf das Verpackungsmaterial eine Sonderfarbe außerhalb des CYMK-Farbraumes aufgedruckt. CMYK (Englisch: Cyan, Magenta, Yellow, Key; Key steht für Black/Schwarz) sind die standardisierten Grundfarben für den Vierfarbendruck. Durch Aufdrucken einer oder mehrerer dieser Farben nacheinander auf den Bedruckstoff lassen sich sehr viele unterschiedliche Farben erzeugen. Die Farbe Schwarz wird zusätzlich verwendet, da sich durch Übereinanderdrucken von Cyan, Magenta und Gelb kein richtiges Schwarz erzeugen lässt. Die mittels der Standardfarben CYMK darstellbaren Farben werden als CYMK-Farbraum bezeichnet. Die Sonderfarbe ist zwar mittels üblicher Digitalkameras oder Scanner erfassbar und auf üblichen Monitoren darstellbar. Sie ist jedoch nicht mittels Vierfarbdruckern druckbar, die im CMYK-Farbraum arbeiten. Infolgedessen kann das weitere Sicherheitsmerkmal nicht auf einfache Weise kopiert werden. In einem weiteren Schritt werden die chaotisch angeordneten Mikrostrukturen erfasst und gemeinsam mit dem Produktcode und der Sonderfarbe als Informationen über ein bestimmtes originales Verpackungsmaterial in einer Datenbank abgelegt. Die Erfassung der Mikrostrukturen erfolgt dabei vorzugsweise über eine optoelektronische Erfassungseinrichtung. Der Produktcode und/oder die Sonderfarbe können ebenfalls mittels einer optoelektronischen Erfassungseinrichtung erfasst werden. Da diese Informationen jedoch bereits vorliegen, können sie auch ohne besondere Erfassung in der Datenbank abgelegt werden. Eine Authentifizierung des Produktes kann auf einfache Weise dadurch erfolgen, dass mittels einer optoelektronischen Erfassungseinrichtung die chaotisch angeordneten Mikrostrukturen, der Produktcode und die Sonderfarbe erfasst werden und an einen Rechner übermittelt werden. Der Rechner überprüft unter Rückgriff auf die Datenbank, ob die übermittelten Informationen mit den für ein bestimmtes Verpackungsmaterial abgelegten Informationen übereinstimmen. Im Falle der Übereinstimmung ist das Produkt echt, ansonsten eine Fälschung.

Gemäß einer Ausführungsart der Erfindung wird ein Produkt mit dem Verpackungsmaterial verpackt. Dadurch dass das Produkt in dem Verpackungsmaterial verpackt ist, ist das Produkt gegen Fälschungen geschützt. Gemäß einer bevorzugten Ausführungsart ist das Verpackungsmaterial so ausgebildet, dass nur nach zumindest teilweiser Zerstörung des Verpackungsmaterials das Produkt entnommen werden kann. An einem teilweise zerstörten Verpackungsmaterial ist ein möglicherweise gefälschtes Produkt erkennbar. Gemäß einer bevorzugten Ausführungsart weist das Verpackungsmaterial einen Originalitätsverschluss auf, d.h. einen Verschluss, der nur nach Zerstörung geöffnet werden kann. Gemäß einer bevorzugten Ausführungsart werden die Schritte 1.1 bis 1.3 des erfindungsgemäßen Verfahrens vor dem Verpacken des Produktes mit dem Verpackungsmaterial durchgeführt. Gegebenenfalls kann der Schritt 1.2 auch nach dem Verpacken des Produktes in dem Verpackungsmaterial durchgeführt werden. Ferner kann das Erfassen der chaotisch angeordneten Mikrostrukturen und/oder Abspeichern gemeinsam mit dem Produktcode und der Sonderfarbe in der Datenbank vor oder nach dem Verpacken des Produktes mit dem Verpackungsmaterial erfolgen. In dem Verpackungsmaterial verpackt gelangt das Produkt an den Abnehmer, gegebenenfalls über den Handel.

Gemäß einer anderen Ausführungsart ist das Verpackungsmaterial selber das Produkt, das durch das erfindungsgemäße Verfahren gegen Fälschungen geschützt wird. Bei dieser Ausführungsart kann der Befüller vor dem Verpacken seines Produktes mit dem Verpackungsmaterial prüfen, ob das Verpackungsmaterial echt oder gefälscht ist.

Gemäß einer weiteren Ausführungsart ist die Datenbank Bestandteil eines Datenbankservers oder eines Cloudservers und über das Internet zugänglich. Die gemäß Schritt 1.4 des Verfahrens erfassten Informationen werden über das Internet in der Datenbank abgelegt, gegebenenfalls nach Zwischenspeicherung beim Hersteller des Verpackungsmaterials oder beim Befüller. Gemäß einer weiteren Ausführungsart werden die gemäß Schritt 1.5 erfassten Informationen zur Authentifizierung des Produktes über das Internet an den Rechner übermittelt.

Gemäß einer weiteren Ausführungsart werden in Schritt 1.6. die Informationen zur Authentifizierung des Produktes über eine drahtlose Kommunikationseinrichtung an den Rechner übermittelt. Hierdurch wird die Überprüfung der Echtheit erleichtert. Gemäß einer weiteren Ausführungsart wird das Ergebnis der Überprüfung an die Kommunikationseinrichtung zurückübermittelt, über die die von der elektrooptischen Erfassungseinrichtung erfassten Informationen an den Rechner übermittelt wurden. Hierdurch werden die Ergebnisse der Überprüfung dem Abnehmer oder dem Handel auf einfache Weise zur Verfügung gestellt.

Das Verfahren ist mittels herkömmlicher Druckmaschinen, optoelektronischer Erfassungseinrichtungen, Kommunikationseinrichtungen und Rechner durchführbar. Insbesondere können der Sicherheitslack und die Sonderfarbe mittels herkömmlicher Farbwerke und/oder Lackierwerke aufgedruckt werden. Ferner können herkömmliche Verpackungsmaschinen zum Verpacken des Produktes mit dem Verpackungsmaterial verwendet werden. Einfache Mobiltelefone, Smartphones, Tablets, Personal Digital Assistants (PDA) können als kombinierte optoelektronische Erfassungseinrichtung und drahtlose Kommunikationseinrichtung genutzt werden. Als optische Erfassungseinrichtungen sind Scannerkassen nutzbar. Als Rechner können bestehende Datenbankserver oder Cloudserver in das Verfahren eingebunden werden. Hohe Investitionen müssen nicht getätigt werden.

Gemäß einer anderen Ausführungsart ist die Datenbank eine Speicherkarte oder ein anderes Speichermedium, das mit einer Authentifizierungsvorrichtung verwendet wird, die eine optoelektronische Erfassungseinrichtung und einen Rechner umfasst. Die Authentifizierungsvorrichtung kann als Handgerät ausgebildet sein. Die Speicherkarte kann autorisierten Händlern zur Verfügung gestellt werden, die diese in die Authentifizierungsvorrichtung einsetzen, um die Überprüfung der Echtheit von Produkten vorzunehmen. Jedem autorisierten Händler kann eine einzigartige Speicherkarte zur Verfügung gestellt werden, die nur die Daten zu den Produkten enthält, die an diesen Händler geliefert werden. Die Authentifizierungsvorrichtung kann das Ergebnis der Überprüfung anzeigen. Alternativ können die Daten den Händlern per Download in verschlüsselter Form zur Verfügung gestellt werden.

Gemäß einer bevorzugten Ausführungsart ist das Verpackungsmaterial ein bahnförmiges oder ein bogenförmiges bedruckbares Substrat (Bedruckstoff). Das bahnförmige Substrat ist in einer Rollendruckmaschine und das bogenförmige Substrat in einer Bogendruckmaschine verarbeitbar. Gemäß einer weiteren Ausführungsart ist das Substrat ein Karton, Pappe, Papier, Kunststofffolie, Metallfolie, Verbundfolie oder ein anderes flexibles Flachmaterial. Gemäß einer weiteren Ausführungsart umfasst das Substrat mindestens eine Schicht ausgewählt aus den folgenden Materialien: Papier, Karton, Pappe, Kunststoff oder Metall. Das Substrat kann insbesondere aus einer oder mehreren Schichten eines einzigen der vorgenannten Materialien oder aus mehreren Schichten verschiedener vorgenannter Materialien bestehen. Die mehreren Schichten können insbesondere durch Kaschieren, Laminieren oder Aufextrudieren zu einem mehrschichtigen Substrat vereinigt werden.

Gemäß einer weiteren Ausführungsart besteht der Sicherheitslack aus nur einer einzigen aufgebrachten Lackschicht. Gemäß einer anderen Ausführungsart besteht der Sicherheitslack aus mehreren aufgebrachten Schichten, von denen mindestens eine Schicht eine Lackschicht ist.

Gemäß einer weiteren Ausführungsart ist der Sicherheitslack ein Wet-Touch-Lack, ein Hammerschlag-Lack, ein Drip-off-Lack, ein mit festen, partikulären Mattierungsmitteln ausgerüsteter Mattlack, ein in Härtestufen mit unterschiedlichen Wellenlängen aushärtbarer UV-Lack oder ein anderer, im getrockneten oder gehärteten Zustand chaotisch angeordnete Mikrostrukturen aufweisender Effektlack.

Ein Wet-Touch-Lack ist ein Effektlack, der beim Aushärten aufgrund eines Abstoßungseffektes eine Oberfläche mit Mikrostrukturen aufweist, die eine ähnliche Topographie wie eine schlecht oder normal mit Wasser benetzte Oberfläche haben. Beispiele für geeignete Wet-Touch-Lacke sind die von der Firma Schmid Rhyner AG, CH-8134 Adliswil-Zürich mit den Markenbezeichnungen WESSCO 2830 und WESSCO 3830 vertriebene Lacke. Diese Lacke sind geeignet für das Aufdrucken durch Flexodruck. Hierbei ist die Struktur über die Menge des aufgebrachten Beschichtungsvolumens in dem Sinne steuerbar, dass mit zunehmenden Volumen der Abstoßungseffekt sichtbarer wird. Die aufgetragene Volumenmenge ist über die Ausprägung der Näpfchen der Rasterwalze (Aniloxwalze) steuerbar.

Ein Hammerschlag-Lack ist ein Effektlack, bei dem unverträgliche Silikonöle ein Bindemittel an der Ausbildung eines zusammenhängenden Filmes auf einem Substrat hindern. Vielmehr entstehen aufgrund von lokal verminderter Oberflächenspannung Krater. Um diese Krater herum werden Glimmerpartikel oder Aluteilchen ringförmig angeordnet. Hierdurch entsteht das optische Erscheinungsbild einer Oberfläche, die einer mit einem Hammer bearbeiteten Metalloberfläche ähnlich ist (www.malerblatt.de/Bildung-Karriere/Nachwuchs/Wie-funktioniert-eigentlich-Hammerschlaglack/).

Ein Drip-off-Lack wird in zwei Schritten aufgebracht. Zunächst wird der Bedruckstoff mit einer Offsetdruckfarbe bedruckt, auf die ein spezieller Öldruckmattlack aufgetragen wird, so dass die Offsetdruckfarbe nur teilweise bedeckt ist. Darauf wird wiederum ein Dispersionslack aufgetragen. Dieser perlt auf dem Öldruckmattlack ab, so dass er dort matt erscheint. Der Dispersionslack ist hochglänzend an den Stellen, an denen er direkt auf die Offsetdruckfarbe aufgedruckt ist (http://www.veredelungslexikon.htwk-leipzig.de/de/veredeln-durch-beschichten/lackieren/drip-off-lack/; http://www.actega.de/terra/produkte/effektlacke/drip-off-lacke.html).

Bei einem Lack, der mit festen, partikulären Mattierungsmitteln ausgerüstet ist, stehen diese nach dem Trocknen als "Mikro-Pickel" aus dem Lackfilm heraus und bilden somit eine Mikrostruktur. Die Dimension der Oberflächentopographie wird durch die Partikelgrößen bestimmt (Volkmar Stenzel, Nadine Rehfeld: Funktionelle Beschichtungen, 2013, Vincentz Network, Hannover, Germany, Seiten 22 bis 23).

Ferner kann der Sicherheitslack eine ausgehärtete Beschichtung mit in chaotischer Anordnung eingebetteten Partikeln sein. Die Beschichtung kann ein Lack, insbesondere ein lösungsmittelbasierender, UV-aushärtender, elektronenstrahlaushärtender oder anderer energieaushärtender Lack oder eine Druckfarbe, insbesondere eine Pigmente oder Farbstoff enthaltende Druckfarbe, sein. Die Beschichtung kann eine oder mehrere der folgenden Eigenschaften aufweisen: transparent, matt, hochglänzend oder an der Oberfläche strukturiert. Die Partikel können mindestens einen der folgenden Partikeltypen umfassen: Faser, Kugel, Quader, Zylinder, Torus, Scheibe, Kegel, Sattelkörper oder andere geometrische oder nichtgeometrische Körper. Einzelheiten dieser Beschichtung sind in der deutschen Patentanmeldung 10 2016 113 426.0 angegeben.

In mehreren Stufen mit unterschiedlichen Wellenlängen härtbare UV-Lacke bilden in einer ersten Härtungsstufe bei kleinen Wellenlängen mit geringer Eindringtiefe eine vernetzte Schicht an der Oberfläche. Diese bildet durch den Härtungsschrumpf kleine Falten aus. Anschließend wird mit UV-Strahlung höherer Wellenlänge die gesamte Lackschicht durchgehärtet. Die chaotische Oberflächenstruktur wird durch die Wellen an der Oberfläche der oberen Schicht gebildet (Stenzel/Rehfeld, a.a.O., Seite 24).

Ferner kann der Sicherheitslack gemäß DE 10 2011 012 274 A1 durch Blasen eines Gases auf die ungehärtete Flüssigkeit mit einer stochastischen Oberflächen-Strukturierung versehen sein.

Gemäß einer weiteren Ausführungsart ist der Produktcode ein QR-Code, ein Barcode oder ein alphanumerischer Code. Ein QR-Code ist ein zweidimensionaler Code, der in einem Datenteil die kodierten Daten in redundanter Form enthält und in nur drei Ecken ein bestimmtes Muster zur Positionserkennung aufweist. Die Darstellungsform ist eine quadratische Matrix aus schwarzen und weißen Quadraten, die die kodierten Daten binär darstellen. Zum Schutz der Daten wird ein fehlerkorrigierender Code verwendet. Es gibt verschiedene Standards, die insbesondere im europäischen Patent EP 0 672 974 B1 und in der ISO/IEC 18004:2006 beschrieben sind. Lesegeräte zum Lesen von QR-Codes verfügen über eine Digitalkamera und einen Decoder. Vielfach weisen sie eine Zielhilfe auf, welche das Lesefeld anzeigt.

Ein Barcode oder Strichcode besteht aus parallel angeordneten Strichen und Abständen zwischen den Strichen. Er kann mit optischen Eingabegeräten wie Lichtstift, Scanner und Kamera mit Fotodiodenzeile oder CCD gelesen werden. Die Striche und Lücken verursachen Hell-Dunkel-Signale, die von den Eingabegeräten in elektrische Impulsfolgen umgewandelt werden. Diese werden decodiert und über genormte Schnittstellen in entsprechende Computer eingegeben. Der Strichcode ist in der internationalen Norm alles ISO/IEC 15420 genormt.

Sonderfarben außerhalb des CMYK-Farbraumes sind insbesondere violette, blaue, grüne und orange Farben. Gemäß einer bevorzugten Ausführungsart werden für die Sonderfarben reine Farben verwendet, d.h. Farben, die vor dem Drucken bereits vorgemischt sind und nicht erst durch Übereinanderdrucken oder Nebeneinanderdrucken mehrerer verschiedener Farben erzeugt werden. Diese reinen Farben werden auch als "Spezialfarben" bzw. "Pantone-Farben" bzw. "Schmuckfarben" bezeichnet.

Gemäß einer weiteren Ausführungsart fällt die Sonderfarbe nicht in den um die Farben Grün, Orange und Violett erweiterten CYMK-Farbraum. Bereits bekannt sind Siebenfarbdrucker, die den erweiterten CYMK-Farbraum abdecken. Sonderfarben, die außerhalb dieses erweiterten CYMK-Farbraumes fallen, sind nicht mittels verfügbarer Siebenfarbdrucker druckbar. Durch diese weitere Einschränkung der Sonderfarbe wird die Sicherheit des Fälschungsschutzes weiter verbessert.

Gemäß einer weiteren Ausführungsart wird die Farbe des Verpackungsmaterials als Referenzfarbe verwendet oder auf das Verpackungsmaterial mindestens eine Referenzfarbe aufgedruckt, wird die Referenzfarbe gemeinsam mit den chaotisch angeordneten Mikrostrukturen, dem Produktcode und der Sonderfarbe als Information über ein bestimmtes originales Verpackungsmaterial in der Datenbank abgelegt, werden vorzugsweise nach dem Verpacken eines Produkts mit dem Verpackungsmaterial die Referenzfarbe, die chaotisch angeordneten Strukturen, der Produktcode und die Sonderfarbe mittels einer optoelektronischen Erfassungseinrichtung erfasst, werden diese Informationen zur Authentifizierung des Produktes über die Kommunikationseinrichtung an den Rechner übermittelt, ermittelt der Rechner anhand der Referenzfarbe die Lichtverhältnisse, unter denen das Foto gemacht wurde, und nimmt unter Berücksichtigung der Lichtverhältnisse die Überprüfung des Fotos mit den in der Datenbank abgelegten Daten der chaotisch angeordneten Strukturen, des Produktes und der Sonderfarbe vor. Bei dieser Ausführungsart wird eine Beeinflussung der Sonderfarbe durch Ausleuchtung bei der Erfassung mittels der optoelektronischen Erfassungseinrichtung, mögliche Reflexionen, Kontraste und die Farbtemperatur der Lichtquelle kompensiert. Infolgedessen können schärfere Kriterien bei der Überprüfung der Sonderfarbe angewandt und die Fälschungssicherheit weiter erhöht werden.

Gemäß einer weiteren Ausführungsart ist die Referenzfarbe weiße Farbe. Weiße Farbe ist für die Ermittlung der Lichtverhältnisse besonders gut geeignet, da sie sämtliche Farben reflektiert. Die weiße Farbe ist gemäß einer Ausführungsart der Erfindung ein Strich eines als Verpackungsmaterial verwendeten, gestrichenen Papiers oder Kartons oder die Einfärbung einer Folie oder eines Films. Gestrichene Papiere oder Kartone sind ein- oder beidseitig mit einer pigmenthaltigen Streichmasse versehen. Gemäß einer anderen Ausführungsart ist die Referenzfarbe auf das Verpackungsmaterial aufgedruckt. Die Referenzfarbe kann eine beliebige bunte oder unbunte Farbe sein, z.B. CMY oder eine Sonderfarbe.

Gemäß einer weiteren Ausführungsart enthält der Produktcode und/oder der Sicherheitslack und/oder die Sonderfarbe Iriodin-Pigmente und/oder andere Glanzpigmente. Die Glanzpigmente erschweren ein Abfotografieren der Sicherheitsmerkmale zum Zwecke der Produktion von Fälschungen, wodurch die Fälschungssicherheit weiter erhöht wird.

Gemäß einer weiteren Ausführungsart wird der Sicherheitslack und/oder der Produktcode ganz oder teilweise in der Sonderfarbe und/oder der Referenzfarbe gedruckt. Hierdurch kann der Platzbedarf für die Sicherheitsmerkmale und den Produktcode reduziert werden. Durch die Integration der Sonderfarbe und/oder der Referenzfarbe in den Sicherheitslack und/oder den Produktcode wird eine Flächenoptimierung auf dem Verpackungsmaterial begünstigt. Wenn der Sicherheitslack ganz in der Sonderfarbe gedruckt wird, fällt das Aufdrucken dieser beiden Sicherheitsmerkmale zusammen, so dass sie mit nur einem einzigen Druckwerk aufgedruckt werden können.

Gemäß einer bevorzugten Ausführungsart wird der Sicherheitslack und/oder der Produktcode ganz in der Sonderfarbe und/oder der Referenzfarbe gedruckt. Gemäß einer anderen Ausführungsart ist nur ein Flächenteil oder eine Schicht des Sicherheitslacks oder nur ein Teil des Produktcodes in der Sonderfarbe und/oder der Referenzfarbe gedruckt.

Gemäß einer bevorzugen Ausführungsart wird der Sicherheitslack ganz in der Sonderfarbe gedruckt und wird der Produktcode zumindest teilweise in der Referenzfarbe gedruckt. Gemäß einer anderen Ausführungsart wird der Sicherheitslack ganz in der Referenzfarbe und wird der Produktcode zumindest teilweise in der Sonderfarbe gedruckt. Gemäß einer anderen Ausführungsart ist die Referenzfarbe eine nicht bedruckte Teilfläche des Striches eines gestrichenen Verpackungsmaterials oder eine nicht bedruckte Teilfläche einer eingefärbten Folie oder eines eingefärbten Films. Gemäß einer weiteren Ausführungsart ist die nicht bedruckte Teilfläche des Striches oder der Folie oder des Films zwischen dem Sicherheitslack und dem Produktcode vorhanden oder eine nicht bedruckte Teilfläche innerhalb des Produktcodes, z.B. innerhalb eines QR-Codes.

Gemäß einer weiteren Ausführungsart wird zumindest eine Positionsmarke eines QR-Codes in der Sonderfarbe und/oder der Referenzfarbe gedruckt. Hierdurch kann der Flächenbedarf reduziert und die Fälschungssicherheit erhöht werden.

Gemäß einer weiteren Ausführungsart wird zumindest ein Strichabschnitt eines Barcodes in der Sonderfarbe und/oder der Referenzfarbe gedruckt. Hierdurch kann der Flächenbedarf reduziert und die Fälschungssicherheit erhöht werden.

Gemäß einer weiteren Ausführungsart sind der Sicherheitslack, der Produktcode, die Sonderfarbe und gegebenenfalls die Referenzfarbe auf dem Verpackungsmaterial gemeinsam in der Objektebene einer Digitalkamera positionierbar. Dies ist vorteilhaft für das Erfassen der Sicherheitsmerkmale und des Produktcodes mit einer einzigen Fotografie. Die Anwendung des Verfahrens wird hierdurch vereinfacht.

Gemäß einer weiteren Ausführungsart sind der Sicherheitslack und der Produktcode an verschiedenen Stellen auf das Verpackungsmaterial aufgedruckt. Gemäß einer weiteren Ausführungsart sind der Sicherheitslack und der Produktcode an verschiedenen Stellen aneinander angrenzend auf das Verpackungsmaterial aufgedruckt. Hierdurch kann der Flächenbedarf reduziert und die Fälschungssicherheit erhöht werden.

Gemäß einer weiteren Ausführungsart wird der Sicherheitslack in ein Sicherheitsfeld und der Produktcode in ein Kodierungsfeld aufgedruckt, dass angrenzend an dem Sicherheitsfeld angeordnet ist. Hierdurch kann der Flächenbedarf reduziert und die Fälschungssicherheit erhöht werden.

Gemäß einer weiteren Ausführungsart sind das Kodierungsfeld und/oder das Sicherheitsfeld rechteckige Felder. Dies ist insbesondere vorteilhaft bei Ausführungen des Kodierungsfeldes als QR-Code oder Barcode. Ferner ist dies von Vorteil für die Erfassung von Sicherheitsmerkmalen und Produktcode durch eine herkömmliche Digitalkamera.

Eine weitere Ausführungsart umfasst mindestens eines der folgenden Merkmale:
- der Sicherheitslack und der Produktcode werden in einem Abstand von maximal 10 mm, vorzugsweise von maximal 5 mm, weiterhin vorzugsweise von maximal 1 mm voneinander auf das Verpackungsmaterial aufgedruckt,
- das Sicherheitsfeld und das Kodierungsfeld werden in einem Abstand von maximal 10 mm, vorzugsweise von maximal 5 mm, weiterhin vorzugsweise von maximal 1 mm voneinander auf das Verpackungsmaterial aufgedruckt,
- das Sicherheitsfeld und das Kodierungsfeld sind quadratische Felder,
- das Sicherheitsfeld und das Kodierungsfeld haben eine Kantenlänge von maximal 10 mm, vorzugsweise von 6 mm.

Gemäß einer weiteren Ausführungsart sind der Sicherheitslack und der Produktcode einander überdeckend oder einander überlappend auf das Verpackungsmaterial aufgedruckt. Gemäß einer bevorzugten Ausführungsart wird zunächst der Sicherheitslack auf das Verpackungsmaterial aufgedruckt und danach der Produktcode auf den Sicherheitslack oder auf den Sicherheitslack und das Verpackungsmaterial aufgedruckt. Dies erleichtert das Aufdrucken des Sicherheitslackes bei der Herstellung des Verpackungsmaterials und das Aufdrucken des Produktcodes beim Verpacken des Produktes mit dem Verpackungsmaterial. Grundsätzlich ist es aber auch möglich, Sicherheitslack und Produktcode beim Herstellen des Verpackungsmaterials aufzudrucken. Durch das Übereinanderdrucken von Sicherheitslack und Produktcode wird der Flächenbedarf weiter reduziert und die Fälschungssicherheit erhöht.

Gemäß einer weiteren Ausführungsart ist der Sicherheitslack, die Sonderfarbe und wahlweise die Referenzfarbe in den Produktcode integriert. Gemäß einer weiteren Ausführungsart ist der Produktcode ein QR-Code, wobei zumindest eine Positionsmarke durch aufgedruckten Sicherheitslack gebildet ist. Ferner ist zumindest eine Positionsmarke durch eine aufgedruckte Sonderfarbe gebildet. Vorzugsweise wird mindestens eine Positionsmarke durch einen Sicherheitslack in der Sonderfarbe gebildet. Gemäß einer weiteren Ausführungsart ist mindestens eine Positionsmarke durch eine Referenzfarbe gebildet. Gemäß einer weiteren Ausführungsart ist mindestens eine Positionsmarke durch einen Sicherheitslack in einer Referenzfarbe gebildet. Bei diesen Ausführungsarten können Positionsmarken des QR-Codes mittels Sicherheitslack, Sonderfarbe und gegebenenfalls Referenzfarbe beim Hersteller des Verpackungsmaterials gedruckt werden und der Datenteil des QR-Codes beim Befüller aufgedruckt werden.

Gemäß einer weiteren Ausführungsart ist die optische Erfassungseinrichtung und die Kommunikationseinrichtung ein Mobiltelefon, Smartphone, Tablet, Personal Digital Assistant oder ein anderes Mobilgerät mit Digitalkamera und Zugang zum Internet, z.B. über Mobiltelefonnetz und/oder WLAN (WiFi). Hierdurch wird eine Überprüfung der Sicherheitsmerkmale und des Produktcodes durch den Handel oder den Abnehmer vereinfacht. Die Digitalkamera wird für die Erfassung der Sicherheitsmerkmale und des Produktcodes verwendet. Über das Mobiltelefonnetz und/oder WLAN werden die erfassten Informationen an den Rechner im Internet kommuniziert. Übliche Mobilgeräte können hierfür verwendet werden.

Gemäß einer weiteren Ausführungsart ist das Verpackungsmaterial ein aus dem bedruckbaren Substrat hergestellter Zuschnitt zum Bilden einer Faltschachtel oder ein aus dem bedruckbaren Substrat gebildeter Beutel oder Tasche oder ein aus dem bedruckbaren Substrat gebildeter Aufkleber oder anderes Etikett (Label). Gemäß einer weiteren Ausführungsart ist die Faltschachtel so ausgebildet, dass das Produkt nicht ohne Zerstörung der Faltschachtel aus dieser entnehmbar ist. Das Etikett, der Label oder der Aufkleber sind gemäß einer weiteren Ausführungsart so ausgebildet, dass sie nicht zerstörungsfrei von einem Produkt oder einer Produktverpackung lösbar sind.

Gemäß einer weiteren Ausführungsart werden der Sicherheitslack, die Sonderfarbe und wahlweise die Referenzfarbe bei der Herstellung des Verpackungsmaterials aufgedruckt, der Produktcode beim Befüllen des Verpackungsmaterials aufgedruckt und die chaotisch angeordneten Strukturen, die Sonderfarbe, der Produktcode und wahlweise die Referenzfarbe beim Befüllen des Verpackungsmaterials erfasst und in die Datenbank eingegeben. Das Aufdrucken des Sicherheitslacks und der Sonderfarbe und gegebenenfalls der Referenzfarbe erfolgt vorteilhafterweise beim Hersteller des Verpackungsmaterials, da dieser meist über eine geeignete Druckmaschine verfügt. Das Aufdrucken des Produktcodes und Erfassen der Sicherheitsmerkmale sowie das Ablegen in der Datenbank erfolgt vorzugsweise beim Befüller, da die Daten für den Produktcode beim Befüller anfallen.

Gemäß einer anderen Ausführungsart werden der Sicherheitslack, die Sonderfarbe, der Produktcode und wahlweise die Referenzfarbe bei der Herstellung des Verpackungsmaterials aufgedruckt und die chaotisch angeordneten Strukturen, die Sonderfarbe, der Produktcode und wahlweise die Referenzfarbe bei der Herstellung des Verpackungsmaterials oder beim Befüllen des Verpackungsmaterials erfasst und in der Datenbank abgelegt. Bei dieser Ausführungsart wird auch der Produktcode vom Hersteller des Verpackungsmaterials aufgedruckt und die Sicherheitsmerkmale und der Produktcode entweder beim Hersteller des Verpackungsmaterials oder beim Befüller des Verpackungsmaterials erfasst und in der Datenbank abgelegt. Für diese Ausführungsart ist es erforderlich, dass der Befüller dem Hersteller des Verpackungsmaterials entsprechende Informationen über den Produktcode zur Verfügung stellt und das bedruckte Verpackungsmaterial beim Befüllen des Produktes dem Produkt zugeordnet wird, für das der Produktcode gilt.

Für das Aufdrucken des Produktcodes kann der Befüller des Verpackungsmaterials einen Standard-Vierfarbdrucker verwenden, insbesondere einen Laserdrucker oder einen Inkjet-Drucker.

Ferner wird die Aufgabe durch ein gegen Fälschungen geschütztes Produkt gelöst, das die folgenden Merkmale umfasst:
- auf ein Verpackungsmaterial ist ein Sicherheitslack aufgedruckt, der als individualisierendes Sicherheitsmerkmal chaotisch angeordnete Mikrostrukturen aufweist, die von außen optisch erfassbar sind,
- auf das Verpackungsmaterial ist ein optisch erfassbarer Produktcode aufgedruckt und
- auf das Verpackungsmaterial ist als weiteres Sicherheitsmerkmal mindestens eine Sonderfarbe außerhalb des CMYK-Farbraums aufgedruckt.

Das gegen Fälschungen geschützte Produkt ist in einem Verfahren mit den Merkmalen 1.4 bis 1.7 von Anspruch 1 verwendbar. Dem Produkt kommen somit die mit dem Verfahren verbundenen vorteilhaften Wirkungen entsprechend zu.

Die nachfolgenden Ausführungsarten des gegen Fälschungen geschützten Produktes weisen die Wirkungen der entsprechenden Ausführungsarten des Verfahrens zum Schützen eines Produktes gegen Fälschungen auf.

Gemäß einer bevorzugten Ausführungsart ist ein Produkt mit dem Verpackungsmaterial verpackt. Durch das Verpackungsmaterial ist das Produkt gegen Fälschungen geschützt.

Gemäß einer weiteren Ausführungsart ist das Verpackungsmaterial ein Zuschnitt zum Herstellen einer Faltschachtel.

Gemäß einer weiteren Ausführungsart ist das gegen Fälschungen geschützte Produkt in einer aus dem Verpackungsmaterial gebildeten Faltschachtel enthalten.

Gemäß einer weiteren Ausführungsart ist das Verpackungsmaterial ein Karton, Pappe, Papier, Kunststofffolie, Metallfolie, Verbundfolie oder ein anderes flexibles Flachmaterial. Gemäß einer weiteren Ausführungsart umfasst das Verpackungsmaterial mindestens eine Schicht ausgewählt aus den folgenden Materialien: Papier, Karton, Pappe, Kunststoff oder Metall.

Gemäß einer weiteren Ausführungsart besteht der Sicherheitslack aus nur einer einzigen aufgebrachten Lackschicht. Gemäß einer anderen Ausführungsart besteht der Sicherheitslack aus mehreren aufgebrachten Schichten, von denen mindestens eine Schicht eine Lackschicht ist.

Gemäß einer weiteren Ausführungsart ist der Sicherheitslack ein Wet-Touch-Lack, ein Hammerschlag-Lack, ein Drip-off-Lack, ein mit festen, partikulären Mattierungsmitteln ausgerüsteter Mattlack, ein in Härtestufen mit unterschiedlichen Wellenlängen aushärtbarer UV-Lack oder ein anderer, im getrockneten oder gehärteten Zustand chaotisch angeordnete Mikrostrukturen aufweisender Effektlack.

Gemäß einer weiteren Ausführungsart ist die Sonderfarbe eine reine Farbe, die vor dem Drucken bereits fertig gemischt ist. Die Sonderfarbe wird somit nicht durch übereinander gedruckte oder nebeneinander gedruckte verschiedene Farben erzeugt.

Gemäß einer weiteren Ausführungsart fällt die Sonderfarbe nicht in den um die Farben Grün, Orange und Violett erweiterten CYMK-Farbraum.

Gemäß einer weiteren Ausführungsart weist das Verpackungsmaterial mindestens eine Referenzfarbe auf. Gemäß einer weiteren Ausführungsart ist die Referenzfarbe eine Farbe des Verpackungsmaterials oder ist die Referenzfarbe auf das Verpackungsmaterial aufgedruckt. Gemäß einer weiteren Ausführungsart ist die Referenzfarbe eine nicht bedruckte Teilfläche eines Striches eines als Verpackungsmaterial verwendeten, gestrichenen Kartons oder Papiers oder ist die Referenzfarbe auf das Verpackungsmaterial aufgedruckt.

Gemäß einer anderen Ausführungsart ist die Referenzfarbe zwischen Sicherheitslack und Produktcode und/oder innerhalb des Produktcodes und/oder neben dem Sicherheitslack und/oder dem Produktcode angeordnet

Gemäß einer weiteren Ausführungsart enthält der Produktcode und/oder der Sicherheitslack und/oder die Sonderfarbe Iriodin-Pigmente und/oder andere Glanzpigmente.

Gemäß einer weiteren Ausführungsart ist der Sicherheitslack und/oder der Produktcode ganz oder teilweise in der Sonderfarbe und/oder der Referenzfarbe gedruckt.

Gemäß einer weiteren Ausführungsart sind der Sicherheitslack, der Produktcode, die Sonderfarbe und gegebenenfalls die Referenzfarbe auf dem Verpackungsmaterial gemeinsam in der Objektebene einer Digitalkamera positionierbar.

Gemäß einer weiteren Ausführungsart ist zumindest eine Positionsmarke eines QR-Codes in der Sonderfarbe und/oder der Referenzfarbe gedruckt.

Gemäß einer weiteren Ausführungsart sind der Sicherheitslack und der Produktcode an verschiedenen Stellen auf das Verpackungsmaterial aufgedruckt.

Gemäß einer weiteren Ausführungsart ist zumindest ein Strichabschnitt eines Barcodes in der Sonderfarbe und/oder der Referenzfarbe gedruckt.

Gemäß einer weiteren Ausführungsart sind der Sicherheitslack und der Produktcode aneinander angrenzend auf das Verpackungsmaterial aufgedruckt.

Gemäß einer weiteren Ausführungsart ist der Sicherheitslack in ein Sicherheitsfeld und der Produktcode in ein Kodierungsfeld aufgedruckt, das angrenzend an dem Sicherheitsfeld angeordnet ist.

Gemäß einer weiteren Ausführungsart sind das Kodierungsfeld und/oder das Sicherheitsfeld rechteckige Felder.

Eine weitere Ausführungsart umfasst mindestens eines der folgenden Merkmale:
- der Sicherheitslack und der Produktcode sind in einem Abstand von maximal 10 mm, vorzugsweise von maximal 5 mm, weiterhin vorzugsweise von maximal 1 mm voneinander auf das Verpackungsmaterial aufgedruckt,
- das Sicherheitsfeld und das Kodierungsfeld sind in einem Abstand von maximal 10 mm, vorzugsweise von maximal 5 mm, weiterhin vorzugsweise von maximal 1 mm voneinander auf das Verpackungsmaterial aufgedruckt,
- das Sicherheitsfeld und das Kodierungsfeld sind quadratische Felder,
- das Sicherheitsfeld und das Kodierungsfeld haben eine Kantenlänge von maximal 10 mm, vorzugsweise von maximal 6 mm.

Gemäß einer weiteren Ausführungsart sind der Sicherheitslack und der Produktcode einander vollständig überdeckend oder einander überlappend auf das Verpackungsmaterial aufgedruckt. Gemäß einer weiteren Ausführungsart ist der Sicherheitslack auf das Verpackungsmaterial aufgedruckt und ist der Produktcode auf den Sicherheitslack oder auf den Sicherheitslack und das Verpackungsmaterial aufgedruckt.

Gemäß einer weiteren Ausführungsart ist der Sicherheitslack in den Produktcode integriert.

Die Erfindung wird nachfolgend anhand der anliegenden Zeichnungen von Ausführungsbeispielen näher erläutert. In den Zeichnungen zeigen:
- Fig. 1: QR-Code und Sicherheitslack in einer Draufsicht;
- Fig. 2: Druckmaschine mit Lackierwerk zum Aufbringen des Sicherheitslackes im Flexodruckverfahren in einer Seitenansicht;
- Fig. 3: Lackierwerk der Druckmaschine in einer Detailansicht;
- Fig. 4: bedrucktes Substrat in eine Perspektivansicht von der Seite;
- Fig. 5: Drucken des Produktcodes und Erfassen und Ablegen von Sicherheitsmerkmalen sowie Produktcode in einem Cloudserver in einem Grobschema;
- Fig. 6: Faltschachtel mit Sicherheitskennzeichnung und Smartphone in einem Grobschema;
- Fig.7: Gesamtprozess zur Verifikation von Originalprodukten in einem Grobschema;
- Fig. 8: Verpackungsmaterial und Mobilgerät zum Erfassen von auf das Verpackungsmaterial aufgedruckten Sicherheitsmerkmalen und Pro-duktcode in einem Grobschema.

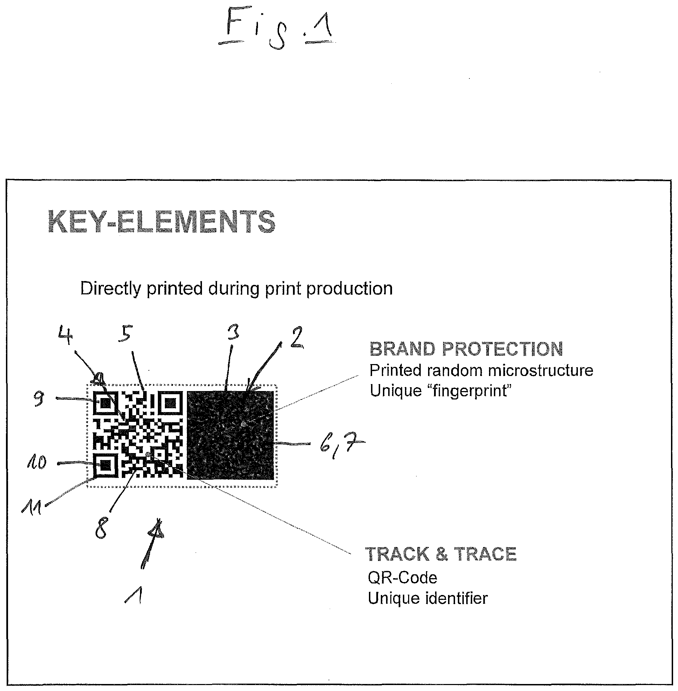

Gemäß Fig. 1 umfasst eine Sicherheitskennzeichnung 1 einen Sicherheitslack 2 in einem Sicherheitsfeld 3 und daran angrenzend einen QR-Code 4 in einem Kodierungsfeld 5.

Das Sicherheitsfeld 3 und das Kodierungsfeld 5 sind jeweils quadratisch mit einer Kantenlänge von z.B. 6 mm.

Der Sicherheitslack 2 weist als individualisierendes Sicherheitsmerkmal chaotisch angeordnete Mikrostrukturen 6 auf und als weiteres Sicherheitsmerkmal eine Sonderfarbe 7 außerhalb des CMYK-Farbraums. Beispielsweise handelt es sich hierbei um einen UV-härtbaren Wet-Touch-Lack mit der Produktbezeichnung WESSCO 2830 der Firma Schmid Rhyner AG. In diesen Lack wird eine vorgemischte Reinfarbe als Sonderfarbe eingemischt. Hierbei handelt es sich beispielsweise um die Patronenfarbe "Reflex-Blue c" .

Der QR-Code 4 enthält in einem Datenteil 8 die kodierten Daten in redundanter Form. In drei seiner Ecken ist jeweils eine quadratische Positionsmarke 9 mit einem Quader 10 und einem diesen umgebenden quadratischen Rahmen 11 angeordnet. Der QR-Code 4 kann insgesamt in schwarzer Farbe aufgedruckt sein. Ferner können die Positionsmarken 9 und/oder der Datenteil 8 in einer Sonderfarbe 7 aufgedruckt sein.

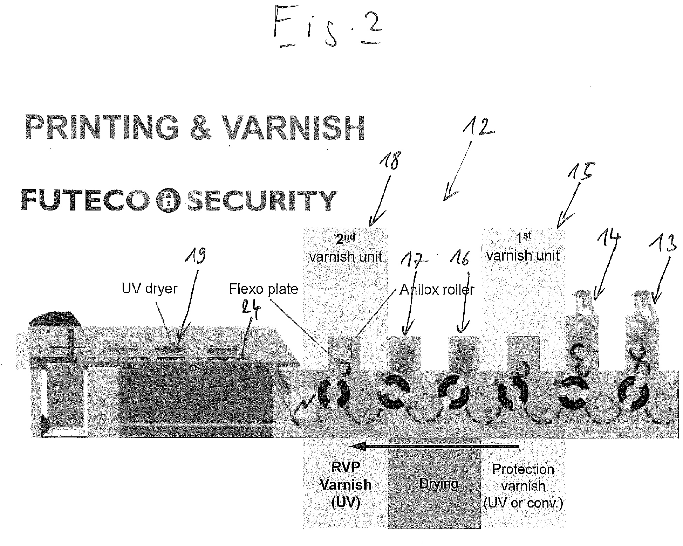

Gemäß Fig. 2 wird das Verpackungsmaterial in einer Druckmaschine 12 mit Farbdruckwerken 13, 14, einem ersten Lackierwerk 15 zum Aufdrucken eines Schutzlackes, Trocknungsstationen 16, 17, einem zweiten Lackierwerk 18 zum Aufdrucken des Sicherheitslackes 2 und einer UV-Trocknungsstation 19 zum Aushärten des Sicherheitslackes 2 bedruckt. Bei den Farbwerken 13, 14 handelt es sich um Tiefdruckwerke.

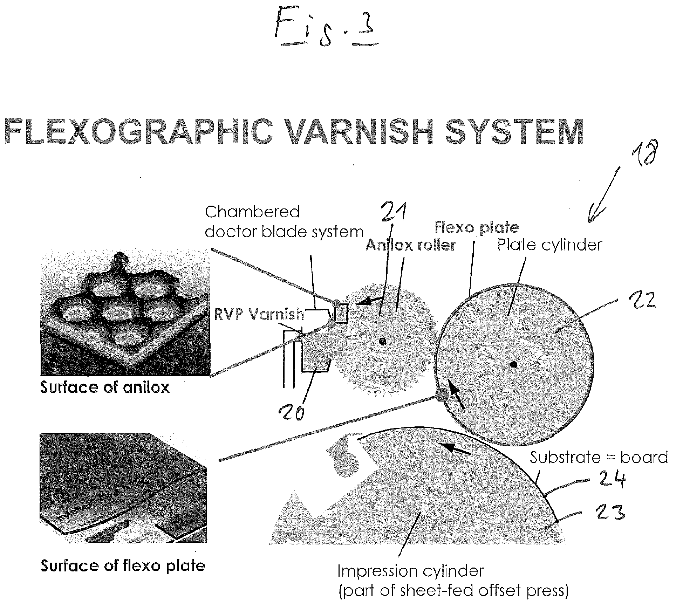

Das zweite Lackierwerk 18 ist gemäß Fig. 3 ein Flexodrucklackierwerk mit Kammerakelsystem 20, Rasterwalze 21, Druckformzylinder 22 und Gegendruckzylinder 23.

Mittels der Farbdruckwerke 13, 14 und nicht gezeigter weiterer Farbdruckwerke werden Druckfarben aufgedruckt, beispielsweise im Vierfarbdruck die Farben CMYK.

In dem ersten Lackierwerk 15 wird ein Schutzlack auf die Druckfarben aufgedruckt. In den nachfolgenden Trocknungsstationen 16, 17 wird der Schutzlack getrocknet.

In dem zweiten Lackierwerk 18 wird der Sicherheitslack 2 aufgedruckt. Der Sicherheitslack enthält die Sonderfarbe 7. Die Auftragsmenge wird durch Auswahl der Rasterwalze 21 gesteuert.

In der nachfolgenden UV-Trocknungsstation 19 wird der Sicherheitslack 2 getrocknet.

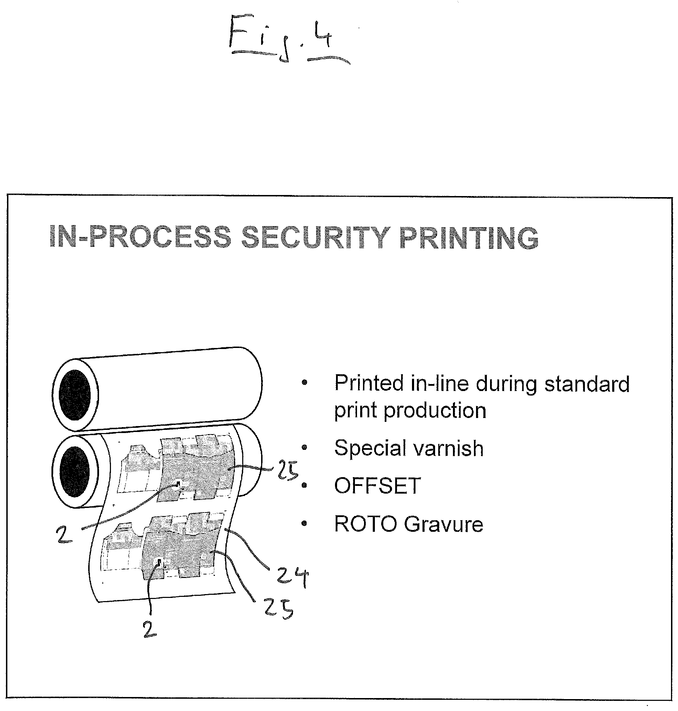

Das zu bedruckende Substrat 24 ist ein Bahnmaterial aus Karton. Gemäß Fig. 4 sind auf das Substrat 24 aufeinanderfolgend die Aufdrucke von Zuschnitten 25 für eine Faltschachtel aufgedruckt. Der Sicherheitslack 2 ist jeweils am unteren Rand einer Seitenwand aufgedruckt. Die Zuschnitte 25 werden durch eine oder mehrere der Operationen Rillen, Stanzen, Prägen, Falten, Kleben weiter bearbeitet, aus dem Bahnmaterial herausgelöst und gegebenenfalls vorgeklebt.

Vom Hersteller des Verpackungsmaterials werden die Zuschnitte 24 flach übereinanderliegend in Stapeln an den Befüller geliefert. Der Befüller richtet die Zuschnitte 24 auf, befüllt sie mit Produkt und schließt sie, vorzugsweise durch Verkleben.

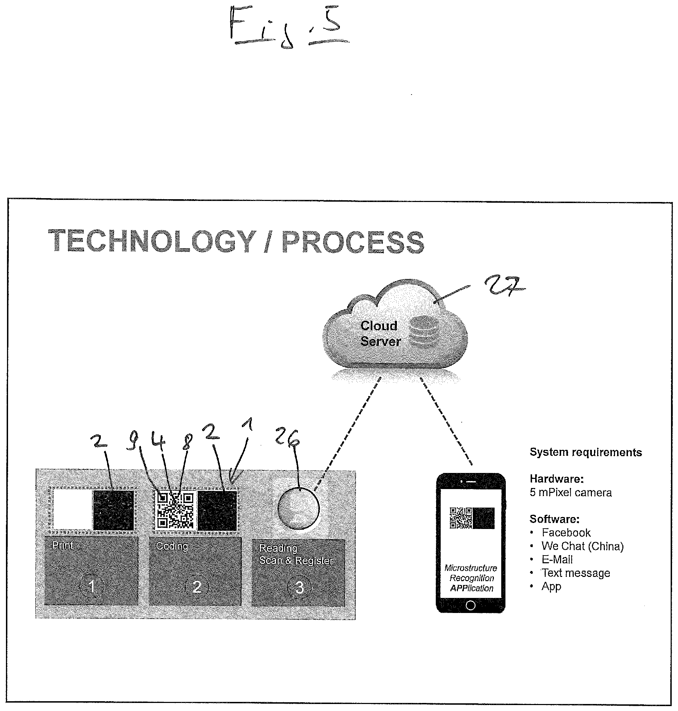

Gemäß Fig. 5 wird der QR-Code 4 beim Befüller mittels eines Standard-Vierfarbdruckers (z.B. Inkjet-Drucker oder Laserdrucker) aufgedruckt. Gegebenenfalls wird vom Befüller nur der Datenteil aufgedruckt und werden die Positionsmarkierungen 9 bereits beim Hersteller des Verpackungsmaterials aufgedruckt, z.B. in einer Sonderfarbe oder in einer Referenzfarbe.

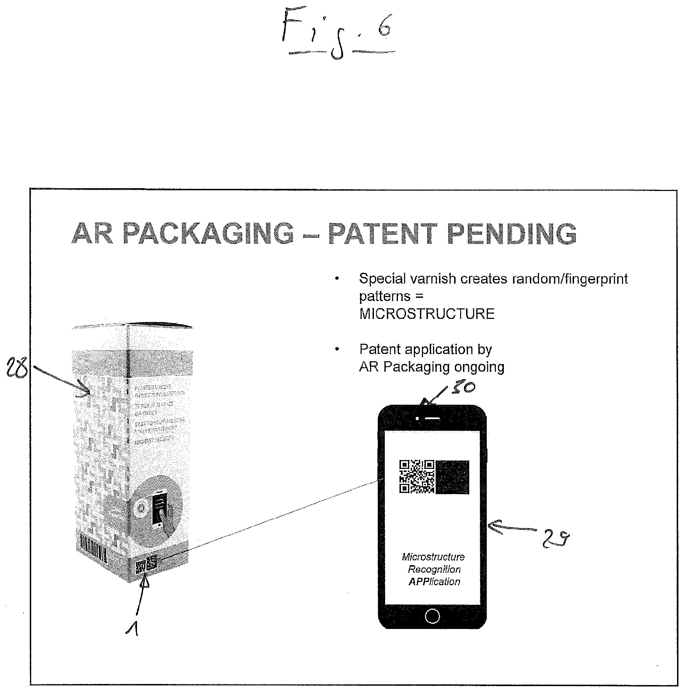

Gemäß Fig. 5 und 6 wird die Sicherheitskennzeichnung 1 mittels einer Kamera 26 erfasst und im Datenspeicher eines Cloudservers 27 abgelegt. Wenn die Sicherheitskennzeichnung 1 komplett beim Hersteller des Verpackungsmaterials erzeugt wird, kann dies schon bei diesem erfolgen. Andernfalls wird die Erfassung und die Abspeicherung beim Befüller vorgenommen.

Die fertige Faltschachtel 28 mit der Sicherheitskennzeichnung 1 am unteren Rand ist in Fig. 6 gezeigt. Mittels eines Smartphones 29 mit einer Digitalkamera 30 und App ist die Sicherheitskennzeichnung 1 lesbar.

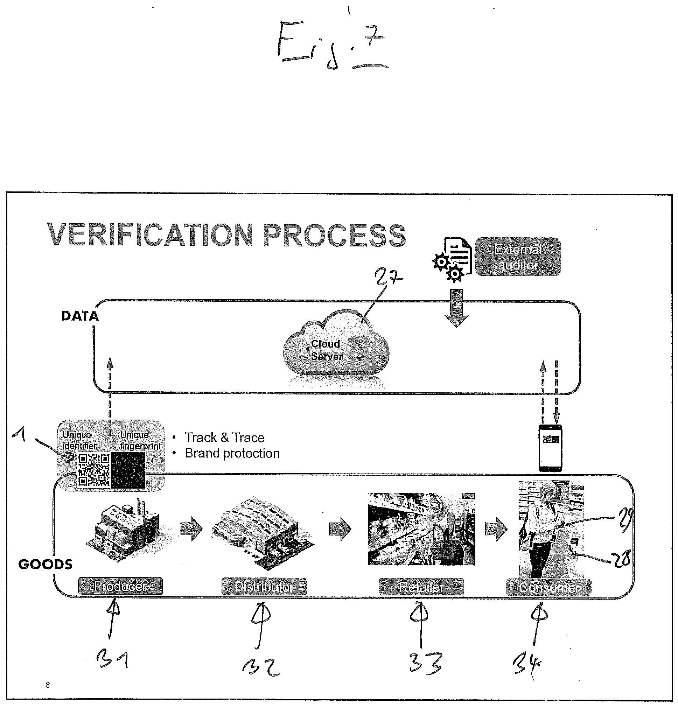

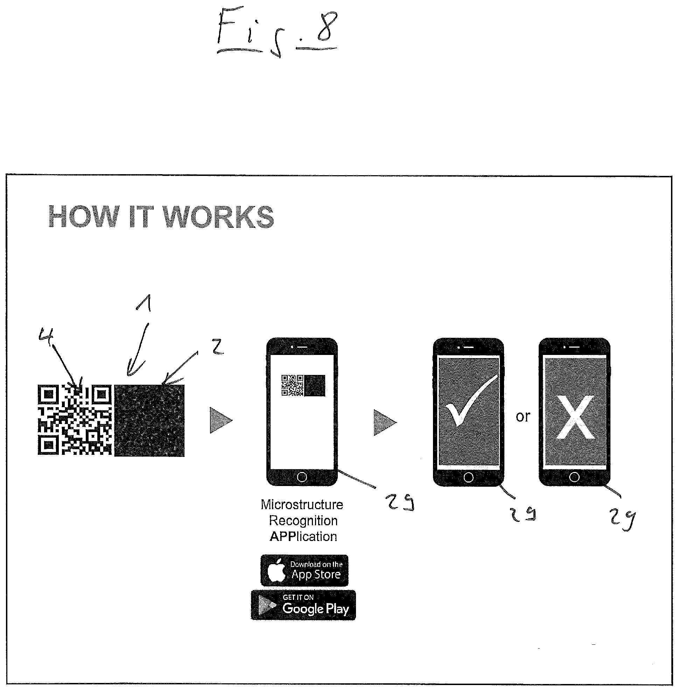

Gemäß Fig. 7 gelangen die vom Hersteller des Produktes und Befüller 31 in Faltschachteln 28 mit der Sicherheitskennzeichnung 1 eingepackten Produkte beispielsweise über den Großhandel 32 oder den Einzelhandel 33 an den Verbraucher 34. Der Verbraucher 34 kann vor dem Erwerb mittels Smartphone 24 die Sicherheitskennzeichnung 1 abfotografieren und an den Cloudserver 27 zur Authentifizierung übersenden. Vom Cloudserver 27 erhält das Smartphone 29 Nachricht, ob der Artikel echt ist oder gefälscht (Fig. 8).

Alternativ wird die Überprüfung beim Scannen der Sicherheitskennzeichnung 1 an der Registrierkasse vorgenommen.

## Patentansprüche

1. Verfahren zum Schützen eines Produkts gegen Fälschungen umfassend die folgenden Schritte:
1.1 auf ein Verpackungsmaterial wird ein Sicherheitslack aufgedruckt, der als individualisierendes Sicherheitsmerkmal chaotisch angeordnete Mikrostrukturen aufweist, die von außen optisch erfassbar sind,
1.2 auf das Verpackungsmaterial wird ein optisch erfassbarer Produktcode aufgedruckt,
1.3 auf das Verpackungsmaterial wird als weiteres Sicherheitsmerkmal mindestens eine Sonderfarbe außerhalb des CMYK-Farbraumes aufgedruckt,
1.4 die chaotisch angeordneten Mikrostrukturen und der Produktcode auf dem Verpackungsmaterial werden erfasst und mit der Sonderfarbe als Information über ein bestimmtes originales Verpackungsmaterial in einer Datenbank abgelegt,
1.5 die chaotisch angeordneten Mikrostrukturen, der Produktcode und die Sonderfarbe auf dem Verpackungsmaterial werden mittels einer optoelektronischen Erfassungseinrichtung erfasst,
1.6 die vorstehenden Informationen werden zur Authentifizierung des Produktes an einen Rechner übermittelt und der Rechner überprüft unter Rückgriff auf die Datenbank, ob die mittels der optoelektronischen Erfassungseinrichtung erfassten Informationen mit den in der Datenbank abgelegten Informationen für ein bestimmtes originales Verpackungsmaterial übereinstimmen.

2. Verfahren nach Anspruch 1, bei dem vor Schritt 1.5. ein Produkt mit dem Verpackungsmaterial verpackt wird.

3. Verfahren nach Anspruch 1 oder 2, bei dem der Sicherheitslack ein Wet-Touch-Lack, ein Hammerschlag-Lack, ein Drip-off-Lack, ein mit festen, partikulären Mattierungsmitteln ausgerüsteter Lack, ein in mehreren Stufen mit unterschiedlichen Wellenlängen aushärtbarer UV-Lack oder ein anderer Effektlack ist, der im aufgedruckten Zustand chaotisch angeordnete Mikrostrukturen aufweist.

4. Verfahren nach einem der Ansprüche 1 bis 3, bei dem der Produktcode ein QR-Code, ein Barcode oder ein alphanumerischer Code ist.

5. Verfahren nacheinem der Ansprüche 1 bis 4, bei dem die Sonderfarbe nicht in den um die Farben Grün, Orange und Violett erweiterten CYMK-Farbraum fällt.

6. Verfahren nach einem der Ansprüche 1 bis 5, bei dem die Farbe des Verpackungsmaterials als Referenzfarbe verwendet oder auf das Verpackungsmaterial mindestens eine Referenzfarbe aufgedruckt wird, die Referenzfarbe gemeinsam mit den chaotisch angeordneten Strukturen, dem Produktcode und der Sonderfarbe in der Datenbank abgelegt werden, vorzugsweise nach dem Verpacken des Produktes mit dem Verpackungsmaterial die Referenzfarbe, die chaotisch angeordneten Mikrostrukturen, der Produktcode und die Sonderfarbe mittels der optoelektronischen Erfassungseinrichtung erfasst werden, diese Informationen zur Authentifizierung des Produktes über eine Kommunikationseinrichtung an einen Rechner übermittelt werden, der Rechner anhand der Referenzfarbe die Lichtverhältnisse ermittelt, unter denen das Foto gemacht wurde und unter Berücksichtigung der Lichtverhältnisse die Überprüfung des Fotos mit den in der Datenbank abgelegten Daten der chaotisch angeordneten Strukturen, des Produktcodes und der Sonderfarbe vornimmt.

7. Verfahren gemäß Anspruch 6, bei dem die Referenzfarbe ein nicht bedruckter Bereich des Striches eines als Verpackungsmaterial verwendeten, gestrichenen Kartons oder Papiers ist oder bei dem die Referenzfarbe die Einfärbung einer als Verpackungsmaterial verwendeten Folie oder eines als Verpackungsmaterial verwendeten Films ist.

8. Verfahren nacheinem der Ansprüche 1 bis 7, bei dem der Produktcode und/oder der Sicherheitslack Iriodin-Pigmente und/oder andere Glanzpigmente enthält.

9. Verfahren nach einem der Ansprüche 1 bis 8, bei dem der Sicherheitslack und/oder der Produktcode ganz oder teilweise in der Sonderfarbe und/oder der Referenzfarbe gedruckt wird.

10. Verfahren nach einem der Ansprüche 4 bis 9, bei dem zumindest eine Positionsmarke eines QR-Codes in der Sonderfarbe und/oder der Referenzfarbe gedruckt wird.

11. Verfahren nach einem der Ansprüche 4 bis 10, bei dem zumindest ein Strichabschnitt eines Barcodes in der Sonderfarbe und/oder der Referenzfarbe gedruckt wird.

12. Verfahren nach einem der Ansprüche 1 bis 11, bei dem der Sicherheitslack und der Produktcode aneinander angrenzend auf das Verpackungsmaterial aufgedruckt werden.

13. Verfahren nach einem der Ansprüche 1 bis 12 umfassend mindestens eines der folgenden Merkmale:
- der Sicherheitslack und der Produktcode werden in einem Abstand von maximal 10 mm, vorzugsweise von maximal 5 mm, weiterhin vorzugsweise von maximal 1 mm voneinander auf das Verpackungsmaterial aufgedruckt,
- das Sicherheitsfeld und das Kodierungsfeld werden in einem Abstand von maximal 10 mm, vorzugsweise von maximal 5 mm, weiterhin vorzugsweise von maximal 1 mm voneinander, auf das Verpackungsmaterial aufgedruckt,
- der Sicherheitslack in einem Sicherheitsfeld und der Produktcode in einem Kodierungsfeld aufgedruckt wird, das angrenzend an dem Sicherheitsfeld angeordnet ist,
- das Kodierungsfeld und/oder das Sicherheitsfeld ist/sind rechteckige Felder,
- das Sicherheitsfeld und das Kodierungsfeld sind quadratische Felder,
- das Sicherheitsfeld und das Kodierungsfeld haben eine Kantenlänge von maximal 10 mm, vorzugsweise von 6 mm.

14. Verfahren nach einem der Ansprüche 1 bis 13, bei dem der Sicherheitslack, die Sonderfarbe und wahlweise die Referenzfarbe bei der Herstellung des Verpackungsmaterials aufgedruckt werden, der Produktcode beim Befüllen des Verpackungsmaterials aufgedruckt wird und die chaotisch angeordneten Strukturen, die Sonderfarbe, der Produktcode und wahlweise die Referenzfarbe beim Befüllen des Verpackungsmaterials erfasst und in die Datenbank eingegeben werden.

15. Verfahren nach einem der Ansprüche 1 bis 13, bei dem der Sicherheitslack, die Sonderfarbe, der Produktcode und wahlweise die Referenzfarbe bei der Herstellung des Verpackungsmaterials aufgedruckt werden und die chaotisch angeordneten Strukturen, der Produktcode und wahlweise die Referenzfarbe bei der Herstellung des Verpackungsmaterials oder beim Befüllen des Verpackungsmaterials erfasst und in der Datenbank abgelegt werden.
